# EUROPEAN PATENT SPECIFICATION

(11) **EP 3 707 103 B1**
(45) Date of publication and mention of the grant of the patent: **04.05.2022**
(21) Application number: 18812265.9
(22) Date of filing: 06.11.2018
(51) Int. Cl.: C03B 23/20

(54) **PROCESS FOR SEALING HOLES IN GLASS AND ARTICLES OBTAINED**
VERFAHREN ZUM VERSIEGELN VON LÖCHERN IN GLAS UND ERHALTENE GEGENSTÄNDE
PROCÉDÉ DE FERMETURE HERMÉTIQUE DE TROUS DANS DU VERRE ET ARTICLES OBTENUS

(30) Priority: 06.11.2017 PT 2017110393
(43) Date of publication of application: 16.09.2020
(73) Proprietor: Efacec Engenharia E Sistemas, S.A., 4471-907 Guardeiras (PT)
(72) Inventor: MAGALHÃES MENDES, Adélio Miguel, 4200-465 PORTO (PT); LOPES MAÇAIRA NOGUEIRA, José Miguel, 4410-104 SÃO FELIX DA MARINHA (PT); IVANOU, Dzmitry, 4465-283 PORTO (PT)
(74) Representative: Patentree
(86) International application number: PCT/IB2018/058715
(87) International publication number: WO 2019/087168

(56) References cited:
- WO-A1-2012/030925
- US-A1- 2013 108 811

## Description

### Technical field

The present subject-matter discloses a new process for closing and sealing holes in glass. It is described the hole design allowing to accomplish a hermetic seal of the hole, without the use of any extra external plug, patch or cover. A localized heat source is used to perform the hole glass fusion without the need of heating the whole substrate. The process is applicable to seal holes in glass surfaces of heat sensitive devices, or holes in glass packages containing liquids or gases.

### Background

Hermetic encapsulation is critical for the devices that are sensitive to the external operating environment and to prevent leakage of inner components.

There are described several bonding techniques in the art that allow bonding glass [1]. The process temperature ranges from 100 °C to 1200 °C depending on the type of substrate, sealing material and heating technique.

Glass frit bonding is one of the most popular, because glass frits have good adhesion to glass, provide hermetic barriers and are thermally stable. Besides the composition of the glass frit can be tailored to the substrate specifications[2].

Glass frit bonding can be accomplished by heating the frit sealant to its melting temperature either by heating the whole substrate, thermo-compressive method[3], or using lasers for heating locally the sealing material[4].

Laser sealing of glass frits is a popular technique that avoids heating the whole substrate, and therefore is suitable to encapsulation of temperature sensitive devices[5].

However, only a few publications describe methods for sealing holes in glass substrates in devices containing heat sensitive components such as volatile electrolytes[6].

Most common techniques available to seal holes in glass surfaces require a patch, or a plug that is placed above the hole and is heated to its melting temperature, bonding itself to the glass surface and thus achieving sealing of the hole. Typical materials are low melting temperature metals and alloys, polymers and glass frits.

Polymers are known to be permeable to gases, degradable under heating, UV radiation and in aggressive media and thus do not guaranty hermetic encapsulation.

Metals and metallic alloys can form hermetic seals, but must be carefully chosen according to its melting temperature, compatibility with the device components, and thermal expansion close to the glass substrate. For example, for glass packages containing corrosive liquids, such as dye sensitized solar cells (DSC), most low melting metals or alloys are not chemically compatible.

Glass frits are suitable hermetic barriers that are chemically less active then metallic alloys and thus can be used as patches or plugs to close holes in glass substrates.

A patent from Corning [7] describes a method for sealing one or more fill holes in glass plate by using a laser absorbing glass patch. The perimeter of the glass patch is fused together with a pre-sintered glass frit perimeter, applied previously around the fill hole. The glass patch is locally heated to its sealing temperature by laser, thus avoiding heating the entire substrate.

This technique requires several process steps, like sealant application around the filling hole and pre-sintering, making the final product cost ineffective.

There is need in the state of art for a process that can economically and efficiently seal filling holes in glass packages containing liquids or heat sensitive materials in devices like dye-sensitized and perovskite solar cells, OLED displays or any other electronic devices assembled on glass.

WO2012/030925 A1 discloses a method of sealing a hole in a glass material comprising the steps of providing a hole in the glass material, obtaining a glass patch, placing the inner surface of the glass patch over the hole and thereafter uniformly heating the sealing line and thereby hermetically sealing the hole with the glass patch.

US2013108811 discloses a method of producing a phosphor-encapsulating capillary tube comprising the step of heating one end portion of an elongate glass capillary tube having an outer shape of a transverse cross-section elongated in a width direction thereof until the one end portion has been melted, integrated, and thus sealed.

These facts are disclosed in order to illustrate the technical problem addressed by the present disclosure.

### General Description

The present subject-matter discloses a method for closing one or more holes in a glass, wherein the hole in the glass is closed without the need of any additional covering or sealing material.

An aspect of the present subject-matter is described a method for closing one or more holes in a glass substrate or glass surface. In this technique, the hole in the glass is closed without any additional covering or sealing material. Instead the hole is closed using the glass material surrounding the hole. This is achieved by structuring the glass near the hole into a chimney-like shape.

In this disclosure, there is no mismatch in thermal expansion coefficients because only one material is fused - glass itself. There are no extra process steps such as deposition, drying or sintering the sealing material or plug/patch to close the hole.

An aspect of the disclosure includes firing a laser beam on a chimney-like structure, made on the glass substrate, melting and sealing it without significantly warming up the material underneath. The laser beam can be scanned over the glass substrate surface melting-sealing only the tiny glass chimney-like structure. A strong, crack-free and hermetic glass seal of the hole is obtained.

An aspect of the disclosure includes, a method for obtaining a sealed hole, in particular a through-hole or a blind hole, in a glass material, comprising the steps of:
making a recess, in particular an annular recess, in said glass material surrounding the hole to obtain a glass tube wall extending from the hole;
fusing said glass tube wall to seal the hole.

In the present disclosure a through-hole, or also referred to as a thru-hole or clearance hole, is a hole that goes completely through an object like a substrate. Thus, the hole is sealed without using any external material to the glass material.

In an embodiment for better results, said glass tube wall may be cylindrical.

In an embodiment for better results, said glass tube wall may have a cylindrical hollow interior and a quadrangular exterior.

In an embodiment for better results, said glass tube wall may extend up to alignment with a surface of the glass material,

In an embodiment for better results, said glass tube wall may extend to be aligned with the surface of the glass material.

In an embodiment for better results, said annular recess may have, depth-wise, a constant cross-section, an increasing width cross-section, or a decreasing width cross-section.

In an embodiment for better results, said annular recess may have walls at an angle relative to the adjoining surface of the glass material and said walls are parallel to the walls of the through-hole.

In an embodiment for better results, said annular recess may have walls at a right angle with the adjoining surface of the glass material.

In an embodiment for better results, said hole may have walls at a right angle with the surrounding surface of the glass material.

In an embodiment for better results, the glass tube wall may be a chimney-shaped.

In an embodiment for better results, the fusing of the glass tube wall may be by laser, blow torch or soldering iron.

In an embodiment for better results, the making of the annular recess may be by laser, milling cutting, mechanical drilling or sandblasting.

In an embodiment for better results, said annular recess may have a depth of more than 100 µm, preferably between 100 µm deep and 1 mm, more preferably between 0.5 mm and 1 mm.

In an embodiment for better results, said glass tube wall may have walls with thickness between of 10 µm and 1 mm, preferably between 100 µm and 250 µm.

In an embodiment for better results, it is use for sealing a heat-sensitive material in said glass material.

Another aspect of the disclosure includes a glass material comprising a sealed hole obtainable by the method according to any of the previous claims, in particular at least two sealed through-hole.

In an embodiment for better results, the glass material may comprise a heat-sensitive material sealed in said glass material.

Another aspect of the disclosure includes an electronic device comprising the glass material of the present subject-matter. In particular, the electronic device may be a solar cell, organic solar cell, inorganic solar cell, dye-sensitized solar cell, perovskite solar cell, fuel cell, or OLED display, among others.

Hole comprising a hole through a glass surface, surrounded by a recess, with a deep of more than 100 µm and preferably between 500 µm and 1000 µm, forming a chimney-like structure, with thin walls of 10 µm until 1 mm and preferably between 100 µm and 250 µm.

The method of making the hole as described in claim 1 preferable by laser drilling, mechanical drilling or sandblasting.

In an embodiment for better results, the method of sealing a hole may applied heat to the hole walls using any heat source but preferable a laser source with wavelength that is absorbed by the glass substrate.

In an embodiment for better results, , the method of sealing a hole may sealing a hole in a glass substrate, by using structural design of the hole without using any external material to the glass substrate.

The method and device of the present disclosure are suitable for photovoltaic (PV), Organic light emitting diode (OLED) and microelectromechanical systems (MEMS) devices and any other glass based devices.

It will be apparent to those skilled in the art that various modifications and variations can be made to the present disclosure. Since modifications, combinations, sub combinations and variations of the disclosed embodiments may occur to persons skilled in the art, the disclosure should be constructed to include everything within the scope of the appended claims.

### Brief Description of the Drawings

The following figures provide preferred embodiments for illustrating the description and should not be seen as limiting the scope of the present disclosure.
Figure 1 illustrates a top view illustration of an electronic device (100) comprising a hole (102) through a glass substrate (101), surrounded an annular recess (104) that allows exposing thin glass walls (103).
Figure 2 illustrates, a cross sectional side view of the substrate represented in Figure 1 taken along line 1-1 in Figure 1, wherein (103) represents a thin glass walls, and (104) represents an annular recess.
Figure 3 illustrates a cross-sectional side view taken along line 1-1 in Figure 1 of the hermetic sealed hole after the walls (103) of the hole (102) have been exposed to an appropriate heat source.
Figure 4 shows, pictures of a laser drilled hole designed as illustrated in Figure 1 and Figure 2. After the thin glass wall, (102), has been exposed to a heat source, the hole structure closes itself creating a hermetic seal (105). Figure 4 also shows of a glass package encapsulated using a polymer (106) containing a volatile liquid (107) and with holes sealed as previously described; this demonstrates that this process is suitable for closing holes in heat sensitive devices.
Figure 5 shows of possible designs of the hole shape that allow a hermetic seal to be created after exposing the glass walls to an appropriate heat source.
Figure 6 illustrates a cross-sectional side view of a dye-sensitized solar cell comprising the hole design according to an embodiment hereof.
Figure 7 illustrates a cross-sectional side view of the device presented in figure 6, after sealing of the holes
   wherein (108) represents the platinum catalyst,
   wherein (109) represents the transparent conductive oxide (TCO),
   wherein (110) represents the sealing layer,
   wherein (111) represents the photo-electrode,
   wherein (112) represents the photo-electrode glass substrate.
Figure 8 illustrates a cross-sectional side view of a perovskite solar cell comprising the hole design according to an embodiment hereof
   wherein (113) compact titanium dioxide blocking layer,
   wherein (114) represents a titanium dioxide mesoporous layer infiltrated with CH3NH3Pbl3,
   wherein (115) represents a zirconia oxide porous layer
   wherein (116) represents a porous carbon layer,
   wherein (117) represents a groove in the TCO layer that separates electrically both sides of the TCO layer,
   wherein (118) represents the TCO layer.

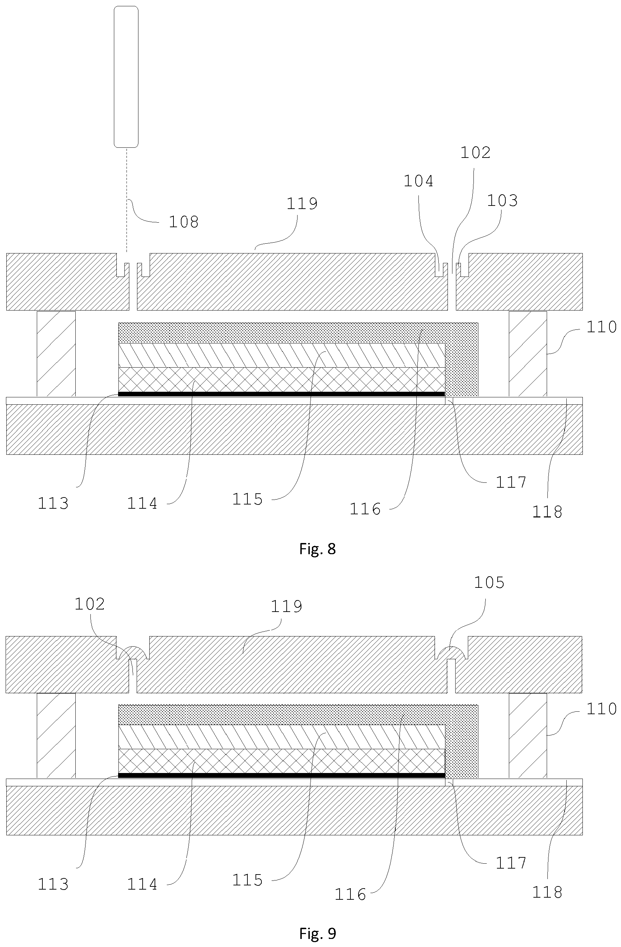

Figure 9 illustrates a cross-sectional side view of the device presented in figure 8, after sealing of the holes wherein represents the hermetic seal of the hole.

### Detailed Description

The present subject-matter describes a hole shape and a fusing process that allows obtaining an efficient hole encapsulation without the need of any external covering or sealing material. The sealing process does not include any patch, plug or cover for sealing the hole through a bonding process.

In an embodiment, a laser beam is fired on a chimney-like structure, made on the glass substrate, melting and sealing it without significantly warming up the material underneath. The laser beam can be scanned over the glass substrate surface melting-sealing only the tiny glass chimney-like structure. Surprisingly, a strong, crack-free and hermetic glass seal of the hole is obtained.

In an embodiment, the hole sealing process is independent of glass substrate temperature. Therefore, this technique can be applied to temperature sensitive devices based on glass substrates, such as organic/inorganic solar cells, glass packages or any other glass based electronic devices.

In an embodiment, the disclosure included a process of sealing the hole is accomplished by structuring the glass near to the hole in a specific design.

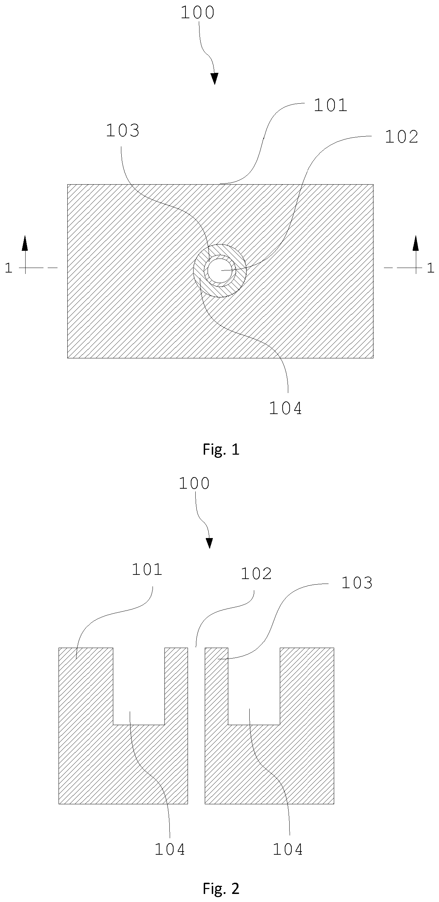

Preferably a possible design is shown in figure 1 (top view) and figure 2 (cross sectional view along line 1-1 in figure 1). The glass substrate (101) is machined in a way so that the hole (102) goes through the substrate (101) and a second annular recess (104), is machined around the trough hole (102), in a way that exposes thin glass walls (103). The obtained chimney like structure has thin glass walls easy to heat, melting and sealing without significant causing heat transfer for underneath.

In an embodiment, to obtain a hermetic encapsulation of the trough hole (102), its glass walls (103), should be heated to the softening or melting temperature; the heating should be applied locally, using a heat source that heats preferably the walls (103), of the hole, (102).

In an embodiment any suitable heat source can be employed for heating the glass walls (103), of the hole (102) for instance, laser source, blowtorch, soldering iron, etc.

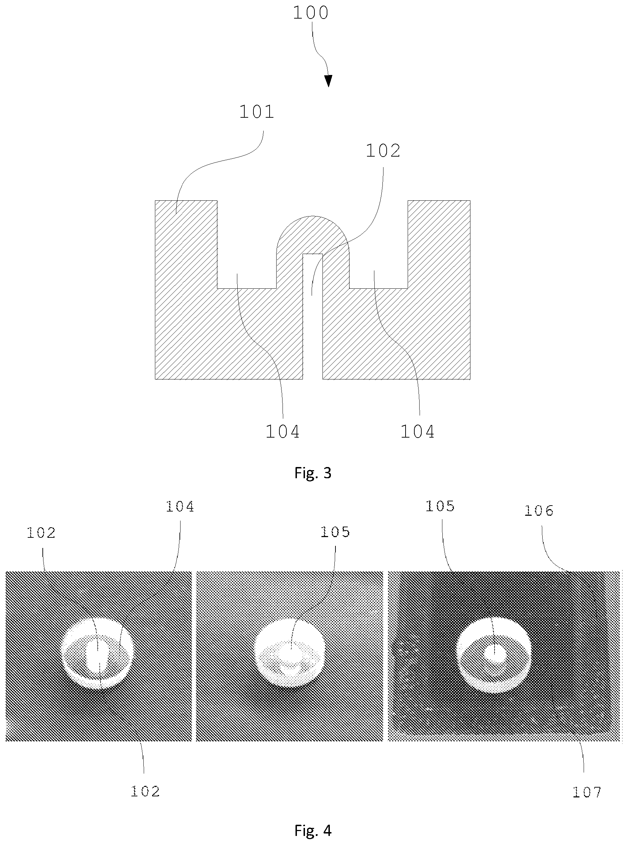

In an embodiment, figure 3 illustrates the result of sealing a hole designed as described previously and in figure 2.

In an embodiment, the hole design disclosed in the present subject-matter, maximizes heat transfer between the thin glass walls (103), and the void present in the annular recess (104) during the fusing step; this dissipates the mechanical stresses caused by expansion during the heating and cooling steps of the fusing process. This allows to heat fast the hole structured walls (103) to the glass softening or melting temperature so that the glass wall (103), shrinks; when the height of the hole wall (103) is at least half of the inner trough hole (102) diameter, this process causes the hermetic sealing of the hole.

In an embodiment, the structuring/drilling/shaping/machining step of the glass substrate should allow obtaining a chimney-like structure with glass walls (103) thin enough to dissipate heat efficiently to avoid cracking of the glass during the heating, fusing and cooling processes.

In an embodiment, figure 4 shows pictures of a soda lime glass where holes were drilled, structured and sealed by laser using the design illustrated in Figure 1, Figure 2 and Figure 3.

In an embodiment, figure 4 shows a picture from a glass package containing a volatile liquid, 107, encapsulated by a polymer, 106. In this package, the hole shape designed as described in this embodiment, was sealed after filling inner cavity of the package with the liquid. This shows that the present disclosure is suitable for obtaining hermetic encapsulation of hole(s) in heat sensitive devices.

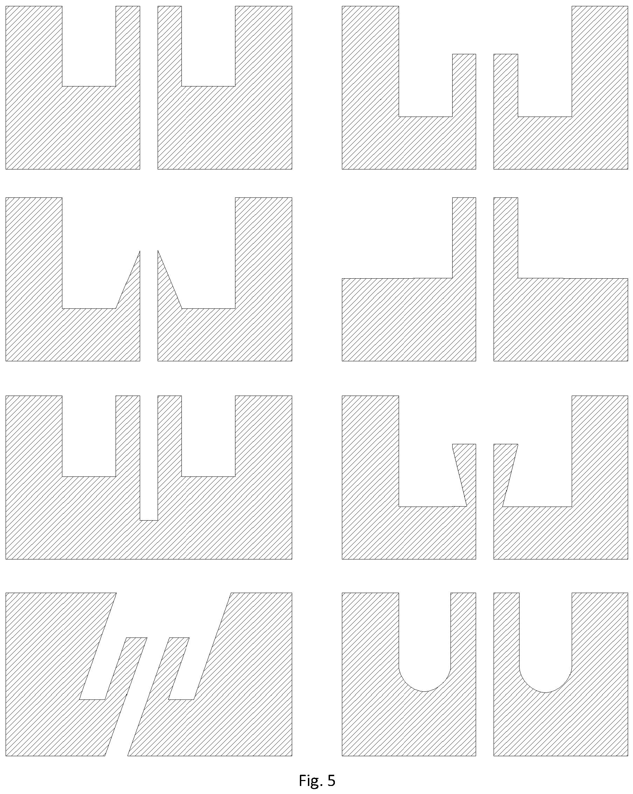

In an embodiment, other possible designs of holes shape that follow the same principle are shown in figure 5.

### Embodiment 1 - Glass sealed Dye-sensitized solar cell

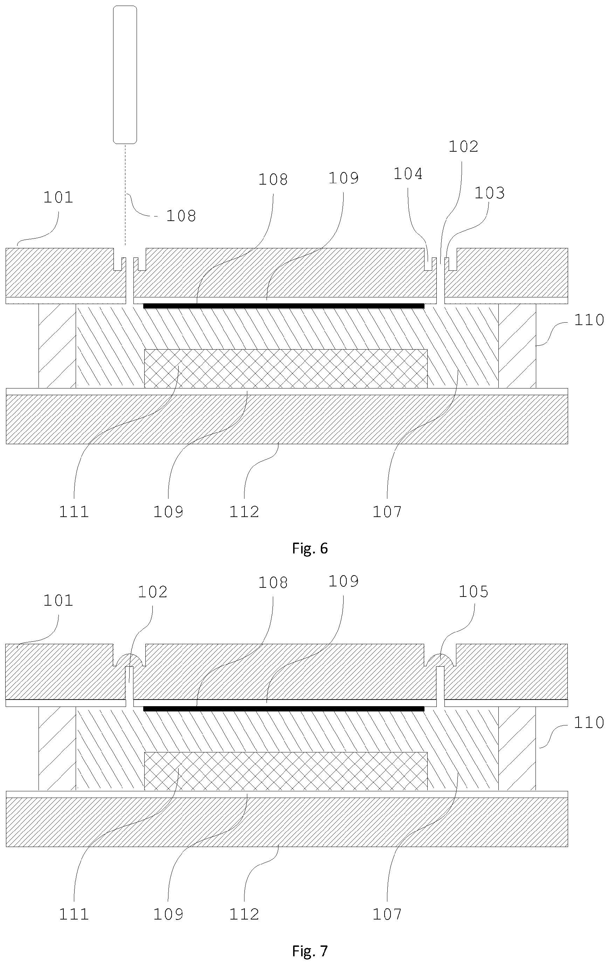

In an embodiment, the dye-sensitized solar cell (DSC) technology is a promising candidate for low cost renewable electricity generation. As illustrated in Figure 6, the DSC device is constructed between two glass substrates coated with a thin conducting oxide (TCO). The TCO glass substrates are spaced by a sealing material, (110) that encloses the active materials of the solar cell. Typically, one the electrodes is coated with platinum (108), and act as cathode; the second substrate (112), is coated with a porous semiconductor (107), usually TiO₂, where a light absorbing material - dye - is adsorbed. The space between both electrodes is filled with a redox electrolyte, responsible for charge transport. Usually one of the electrodes is drilled with one or more filling holes (102), for electrolyte filling and, if necessary also dye adsorption. The filling hole(s) need to be sealed after all the components are present in the interior of the solar cell package. Because dye and electrolyte are heat sensitive materials, the filling hole sealing process must be done at low temperature (<80 °C).

In an embodiment, the filling holes are machined by laser as illustrated in Figure 4. Afterwards, a glass frit paste is printed and sintered in both TCO substrates. Then, a titanium dioxide and platinum catalyst paste are printed and sintered at 500 °C in each of the TCO glass substrates; the TCO substrates are then sandwiched together and fused by heating the glass paste material to the sealing temperature; the dye adsorption is carried out by circulating the dye solution from one hole to the other, followed by electrolyte filling. Finally, both holes are fused by locally heating the thin glass wall (103), of the holes to their melting temperature using a laser. The hole sealing process takes place during less than a second. The temperature of the glass substrate is unaffected by the sealing process of the hole.

In an embodiment, a DSC device is obtained with the two holes hermetically sealed as shown in Figure 5.

### Embodiment 2 - Glass sealed Perovskite solar cell

In an embodiment, perovskite solar cells (PSCs) have emerged as the most promising photovoltaic technology in recent years. From 2003 to 2016, PSCs efficiency has increased from 13 % to 22 %. However, PSCs are known to be highly sensitive to oxygen and water. Therefore, hermetic packaging of PSC devices must be assured to provide long term stability.

Besides the inner components of the PSC are known to be heat sensitive, and undergo degradation above 80 °C.

The hermetic hole sealing process disclosed herein does not heat the substrate, therefore unlocks the possibility of obtaining a fully glass encapsulated perovskite solar cell.

An embodiment, illustrated in Figure 8, shows how a perovskite solar cell is fully encapsulated using glass.

In an embodiment, PSCs are constructed in a single conductive substrate (118) which is electrically isolated by a groove (117), into two distinct areas in the conductive oxide (118).

This embodiment shows a possible PSC configuration, where several components are stacked together in a conductive TCO substrate (118), to form the device; the components are a compact titanium dioxide blocking layer (113), a titanium dioxide mesoporous layer (114), a zirconia oxide porous layer (115), and a porous carbon layer (116). The components are stacked together on conductive substrate (118), and enclosed by a glass frit sealing material (110). The conductive substrate is sandwiched with a second insulating glass substrate (119) with predrilled holes with the hole design described in Figure 3. Both substrates are sealed, by heating the glass frit sealant to the sealing temperature using an IR oven or using an appropriate laser source. Then, the perovskite is formed *in situ* by sequentially circulating solutions with the dissolved precursor materials of the perovskite light absorber. The holes are then sealed using a laser source aimed that the glass walls (103). Figure 6 illustrates the hole sealing process and Figure 7 illustrates an electronic device.

The term "comprising" whenever used in this document is intended to indicate the presence of stated features, integers, steps, components, but not to preclude the presence or addition of one or more other features, integers, steps, components or groups thereof.

It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

The following references are relevant:
1. US6197139B1 - Ju, B.K., M.H. Oh, and W.B. Choi, Method for electrostatic thermal bonding of a pair of glass substrates by utilizing a silicon thin film.s.
2. US8490434B2 - Watanabe, M. and M. Ono, Process and apparatus for producing glass member provided with sealing material layer and process for producing electronic device.
3. R. Sastrawan, J.B., U. Belledin, S. Hemming, A. Hinsch, R. Kern, C. Vetter, F. M. Petrat, A. Prodi-Schwab, P. Lechner, W. Hoffmann, New interdigital design for large area dye solar modules using a lead-free glass frit sealing. Progress in Photovoltaics: Research and Applications, 2006. 14(8): p. 697-709.
4. S8375744 B2 - Becken, K.J., et al., Hermetically sealed glass package and method of manufacture, 2013.
5. WO2014052178A1 - Veerasamy, V.S. and M.D. Bracamonte, Low temperature hermetic sealing via laser, 2016.
6. Maçaira, J., L. Andrade, and A. Mendes, Laser sealed dye-sensitized solar cells: Efficiency and long term stability. Solar Energy Materials and Solar Cells, 2016. 157: p. 134-138.
7. WO2012030925A1 - Logunov, S.L. and M. Prassas, Process for sealing a glass package and resulting glass package, 2012*.*

## Claims

1. Method for obtaining a sealed hole in a glass material, comprising the steps of:
making a recess in said glass material surrounding the hole to obtain a glass tube wall extending from the hole;
fusing said glass tube wall to seal the hole.

2. Method according to the previous claim wherein the hole is a through-hole, a blind hole, or combinations thereof.

3. Method according to the previous claims wherein recess is an annular recess.

4. Method according to the previous claims wherein said glass tube wall is cylindrical, preferably said glass tube wall has a cylindrical hollow interior and a quadrangular exterior, preferably said glass tube wall extends up to alignment with a surface of the glass material.

5. Method according to the any of the previous claims wherein said annular recess (104) has, depth-wise, a constant cross-section, an increasing width cross-section, or a decreasing width cross-section.

6. Method according to the any of the previous claims wherein said annular recess has walls at an angle relative to the adjoining surface of the glass material and said walls are parallel to the walls of the hole, preferably said annular recess has walls at a right angle with the adjoining surface of the glass material.

7. Method according to the any of the previous claims wherein said hole has walls at a right angle with the surrounding surface of the glass material.

8. Method according to the any of the previous claims wherein the glass tube wall is chimney-shaped.

9. Method according to the any of the previous claims wherein the fusing of the glass tube wall is by laser, blow torch or soldering iron.

10. Method according to the any of the previous claims wherein the making of the annular recess is by laser, milling cutting, mechanical drilling or sandblasting.

11. Method according to the any of the previous claims wherein said recess has a depth of more than 100 µm, preferably between 100 µm deep and 1 mm, more preferably between 0.5 mm and 1 mm, and wherein said glass tube wall has walls with thickness between of 10 µm and 1 mm, preferably between 100 µm and 250 µm.

12. Method according to the any of the previous claims for sealing a heat-sensitive material in said glass material.

13. Glass material comprising a sealed hole obtainable by the method according to any of the previous claims, in particular at least two sealed through-hole.

14. Glass material according to the previous claim comprising a heat-sensitive material sealed in said glass material.

15. Electronic device comprising the glass material obtainable by the method according to claim 11.

## Patentansprüche

1. Verfahren zum Erhalten eines versiegelten Lochs in einem Glasmaterial, umfassend die Schritte:
Herstellen einer Vertiefung in dem genannten Glasmaterial, die das Loch umgibt, um eine Wand eines Glasrohrs zu erhalten, die sich von dem Loch aus erstreckt;
Schmelzen der genannten Wand des Glasrohrs, um das Loch zu versiegeln.

2. Verfahren nach dem vorangehenden Anspruch, wobei das Loch ein Durchgangsloch, ein Sackloch oder Kombinationen davon ist.

3. Verfahren nach den vorangehenden Ansprüchen, wobei die Vertiefung eine ringförmige Vertiefung ist.

4. Verfahren nach den vorangehenden Ansprüchen, wobei die genannte Wand des Glasrohrs zylindrisch ist, die Wand des Glasrohrs bevorzugt einen zylindrischen inneren Hohlraum und eine viereckige Außenseite aufweist, wobei sich die genannte Wand des Glasrohrs nach oben erstreckt, um mit der Oberfläche des Glasmaterial abzuschließen.

5. Verfahren nach einem der vorangehenden Ansprüche, wobei die genannte ringförmige Vertiefung (104) nach unten hin einen gleichbleibenden Querschnitt, einen Querschnitt mit zunehmender Breite oder einen Querschnitt mit abnehmender Breite aufweist.

6. Verfahren nach einem der vorangehenden Ansprüche, wobei die genannte ringförmige Vertiefung Wände in einem Winkel relativ zu der angrenzenden Oberfläche des Glasmaterials aufweist und die genannten Wände parallel zu den Wänden des Lochs sind, wobei die genannte ringförmige Vertiefung bevorzugt Wände in einem rechten Winkel zu der angrenzenden Oberfläche des Glasmaterials aufweist.

7. Verfahren nach einem der vorangehenden Ansprüche, wobei das genannte Loch Wände aufweist, die mit der umgebenden Oberfläche des Glasmaterials einen rechten Winkel bilden.

8. Verfahren nach einem der vorangehenden Ansprüche, wobei die Wand des Glasrohrs kaminförmig ist.

9. Verfahren nach einem der vorangehenden Ansprüche, wobei die Wand des Glasrohrs durch Laser, Brenner oder Lötkolben verschmolzen wird.

10. Verfahren nach einem der vorangehenden Ansprüche, wobei die ringförmige Vertiefung durch Laser, Fräsen, mechanisches Bohren oder Sandstrahlen hergestellt wird.

11. Verfahren nach einem der vorangehenden Ansprüche, wobei die genannte Vertiefung eine Tiefe von mehr als 100 µm, bevorzugt zwischen 100 µm und 1 mm, besonders bevorzugt zwischen 0,5 mm und 1 mm, aufweist, und wobei die genannte Wand des Glasrohrs eine Stärke zwischen 10 µm und 1 mm, bevorzugt zwischen 100 µm und 250 µm, aufweist.

12. Verfahren nach einem der vorangehenden Ansprüche zum Versiegeln eines wärmeempfindlichen Materials in dem genannten Glasmaterial.

13. Glasmaterial mit einem versiegelten Loch, das nach einem der vorangehenden Ansprüche erhalten wurde, insbesondere mit mindestens zwei versiegelten Durchgangslöchern.

14. Glasmaterial nach dem vorangehenden Anspruch, umfassend ein wärmeempfindliches Material, das in dem genannten Glasmaterial eingeschlossen ist.

15. Elektronische Vorrichtung, die das nach dem Verfahren nach Anspruch 11 erhältliche Glasmaterial enthält.

## Revendications

1. Procédé pour l'obtention d'un trou hermétiquement fermé dans un matériau de verre, comprenant les étapes de :
faire un renfoncement dans ledit matériau de verre autour du trou pour obtenir une paroi de tube de verre qui s'étend à partir du trou ;
fusionner ladite paroi de tube de verre pour fermer hermétiquement le trou.

2. Procédé selon la revendication précédente, dans lequel le trou est un trou de passage, un trou borgne, ou des combinaisons de ceux-ci.

3. Procédé selon les revendications précédentes, dans lequel le renfoncement est un renfoncement annulaire.

4. Procédé selon les revendications précédentes, dans lequel ladite paroi de tube de verre est cylindrique, ladite paroi de tube de verre ayant préférablement un intérieur creux cylindrique et un extérieur quadrangulaire, ladite paroi de tube de verre s'étendant préférablement jusqu'à l'alignement avec une surface du matériau de verre.

5. Procédé selon l'une quelconque des revendications précédentes, dans lequel ledit renfoncement annulaire (104) a, en profondeur, une section transversale constante, une section transversale à largeur croissante, ou une section transversale à largeur décroissante.

6. Procédé selon l'une quelconque des revendications précédentes, dans lequel ledit renfoncement annulaire a des parois à un angle par rapport à la surface attenante du matériau de verre et lesdites parois sont parallèles aux parois du trou, ledit renfoncement annulaire ayant préférablement des parois à un angle droit par rapport à la surface attenante du matériau de verre.

7. Procédé selon l'une quelconque des revendications précédentes, dans lequel ledit trou a des parois à un angle droit par rapport à la surface environnante du matériau de verre.

8. Procédé selon l'une quelconque des revendications précédentes, dans lequel la paroi de tube de verre est en forme de cheminée.

9. Procédé selon l'une quelconque des revendications précédentes, dans lequel la fusion de la paroi de tube de verre est faite par laser, chalumeau ou fer à souder.

10. Procédé selon l'une quelconque des revendications précédentes, dans lequel la création du renfoncement annulaire est faite par laser, fraisage, perçage mécanique ou sablage.

11. Procédé selon l'une quelconque des revendications précédentes, dans lequel ledit renfoncement a une profondeur de plus de 100 µm, préférablement entre 100 µm de profondeur et 1 mm, plus préférablement entre 0,5 mm et 1 mm, et dans lequel ladite paroi de tube de verre a des parois d'une épaisseur située entre 10 µm et 1 mm, préférablement entre 100 µm et 250 µm.

12. Procédé selon l'une quelconque des revendications précédentes pour fermer hermétiquement un matériau sensible à la chaleur dans ledit matériau de verre.

13. Matériau de verre comprenant un trou fermé hermétiquement pouvant être obtenu par le procédé selon l'une quelconque des revendications précédentes, en particulier au moins deux trous de passage fermés hermétiquement.

14. Matériau de verre selon la revendication précédente comprenant un matériau sensible à la chaleur fermé hermétiquement dans ledit matériau de verre.

15. Dispositif électronique comprenant le matériau de verre pouvant être obtenu par le procédé selon la revendication 11.
